# EUROPEAN PATENT APPLICATION

(11) **EP 4 814 424 A1**
(43) Date of publication of application: **30.09.2026**
(21) Application number: 24894633.7
(22) Date of filing: 21.11.2024
(51) Int. Cl.: F27B 7/24, F27B 7/32, F27B 7/34, F27B 7/36, F27D 99/00

(54) **KILN-TYPE FURNACE APPARATUS WITH SEALED STRUCTURE**

(30) Priority: 22.11.2023 KR 20230163279
(71) Applicant: POSCO Holdings Inc., Pohang-si, Gyeongsangbuk-do 37859 (KR)
(72) Inventor: WOO, Sam-Je, Pohang-si, Gyeongsangbuk-do 37877 (KR); LEE, Byung-Heon, Pohang-si, Gyeongsangbuk-do 37877 (KR); LEE, Sang-Min, Pohang-si, Gyeongsangbuk-do 37877 (KR); LEE, Jin-Kuk, Pohang-si, Gyeongsangbuk-do 37877 (KR); KIM, Nam-Gyu, Pohang-si, Gyeongsangbuk-do 37877 (KR)
(74) Representative: Pfenning, Meinig & Partner mbB
(86) International application number: PCT/KR2024/018480
(87) International publication number: WO 2025/110741

(57) **Abstract**

The present invention relates to a kiln-type furnace apparatus having a sealed structure, which is capable of creating an oxygen-free atmosphere in a furnace in order to prevent fire and explosion accidents in the furnace during a calcination process from among waste-battery recycling processes. In an embodiment, provided is the furnace apparatus comprising a rotating body which is rotated to agitate a raw material supplied therein, wherein the rotating body comprises: a rotating portion sequentially provided with a heating region in which the raw material is heated and a cooling region in which the raw material heated while passing through the heating region is cooled down; a fixing portion comprising a first fixing chamber and a second fixing chamber respectively connected to both ends of the rotating portion, and supporting the rotating portion; sealing portions which are provided to sides where the rotating portion and the fixing portion are coupled and prevent air inflow into the rotating portion; a raw material supply portion which is connected to the first fixing chamber and supplies the raw material to the rotating portion; and a raw material discharge portion which is connected to the second fixing chamber and discharges the raw material calcinated in the rotating portion.

## Description

### Technical Field

The present disclosure relates to a kiln-type furnace apparatus having a sealed structure.

### Background Art

With the recent proliferation of electric vehicles, demand for electric vehicle batteries is increasing. At the same time, interest in recycling spent batteries that have reached the end of their useful lifespan and are no longer functioning properly is also growing.

Waste batteries for electric vehicles are recycled by recovering valuable metals such as Li, Ni, Co, Mn, Cu and the like. At this time, a firing process is performed to remove organic substances such as electrolytes or the like, as a process for regeneration, but furnace equipment frequently experiences fires and explosions due to the inflow of oxygen during operations thereof. Furthermore, improper calcination may result in excessive Total Organic Carbon (TOC) content in wastewater and products, leading to various problems.

(Patent Document) KR 10-2022-0116827 A

### Disclosure of Invention

### Technical Problem

The present disclosure is intended to solve the above problems, and relates to a kiln-type furnace apparatus having a sealed structure capable of creating an oxygen-free atmosphere inside the furnace to prevent fires and explosion accidents in the furnace during a firing process in the waste battery recycling process.

### Solution to Problem

According to an aspect of the present disclosure, to obtain the above purpose, the present disclosure provides the following furnace apparatus.

According to an aspect of the present disclosure, a furnace apparatus includes a rotating portion including a rotating body rotating to stir a raw material supplied thereto, the rotating body including a heating region for heating the raw material and a cooling region for cooling the raw material heated while passing through the heating region, sequentially provided therein, a fixing portion including a first fixing chamber and a second fixing chamber connected to both ends of the rotating portion respectively, and supporting the rotating portion, a sealing portion provided on a side on which the rotating portion and the fixing portion are coupled, and provided to prevent air from entering the rotating portion, a raw material supply portion connected to the first fixing chamber and supplying the raw material to the rotating portion, and a raw material discharge portion connected to the second fixing chamber and discharging a fired raw material from the rotating portion.

In an embodiment, the sealing portion may include a sealing ring having a ring shape surrounding the rotating body and having an accommodation space therein to accommodate a disk protruding outwardly of the rotating body, a packing member provided inside the sealing ring and compressing both side surfaces of the disk, an elastic member connected to one end of the packing member and compressing the packing member toward the disk, and a connecting member connecting the sealing ring and the fixing portion and preventing air from entering an interior of the rotating body.

In an embodiment, at least a portion of the connecting member may be composed of a flexible material that expands or contracts with longitudinal movement of the rotating body.

In an embodiment, the accommodation space may be provided to be larger than the disk to accommodate radial movement of the rotating body.

In an embodiment, the raw material supply portion may include a first supply hopper storing a raw material, a second supply hopper connected to the first supply hopper, and receiving and storing a preset amount of the raw material from the first supply hopper via a first rotary valve, and a first screw feeder connected to the second supply hopper and receiving a preset amount of the raw material from the second supply hopper via a second rotary valve and transferring the raw material to the rotating body. The first rotary valve and the second rotary valve may have the same preset amount.

In an embodiment, the first supply hopper and the second supply hopper may include a load cell for measuring a load of the raw material respectively stored therein, and the first supply hopper and the second supply hopper may be provided such that an amount of raw material stored therein, measured by the load cell, is equal to a preset numerical range or more.

In an embodiment, the first screw feeder may include a cylindrical housing, a screw provided inside the housing and transporting the raw material, a supply motor provided on one end of the housing and rotating the screw, and a rotation control unit connected to the supply motor and controlling a rotational speed of the screw. The rotation control unit may control a rotational speed of the screw such that an amount of raw material delivered by the first rotary valve and the second rotary valve is equal to an amount of raw material transported into the rotating body by the screw.

In an embodiment, the raw material discharge portion may include a first discharge hopper storing the discharged raw material, a second discharge hopper connected to the first discharge hopper, and receiving and storing the raw material from the first discharge hopper, and a second screw feeder connecting the first discharge hopper and the second discharge hopper and installed to be inclined with respect to a plane parallel to a ground.

In an embodiment, the second screw feeder may be provided such that a side thereof connected to the first discharge hopper is inclined to be closer to the ground than a side connected to the second discharge hopper.

In an embodiment, the raw material discharge portion may further include a pneumatic conveying device connected to the second discharge hopper and conveying the raw material received from the second discharge hopper using gas.

The furnace apparatus may further include a pressure gauge measuring pressure inside the rotating body, a thermometer measuring a temperature inside the rotating body, and an oxygen concentration meter measuring a concentration of oxygen flowing inside the rotating body.

The furnace apparatus may further include a nitrogen supply device for supplying nitrogen gas, a control valve for controlling an amount of the nitrogen gas supplied from the nitrogen supply device, and a nitrogen supply pipe connecting the nitrogen supply device and the rotating body.

In an embodiment, the control valve may be controlled to supply nitrogen gas when the pressure measured by the pressure gauge is lower than a lower limit of a preset numerical range.

The furnace apparatus may further include a cooling water spray device provided on the cooling region side and spraying cooling water onto an outer peripheral surface of the rotating body.

### Advantageous Effects of Invention

According to an embodiment of the present disclosure, an oxygen-free atmosphere may be created in a furnace during a firing process during a waste battery recycling process to prevent fire and explosion accidents.

Furthermore, according to an embodiment of the present disclosure, a heating unit and a cooling unit are integrated into a single furnace instead of being two-stage, enabling furnace scale-up.

### Brief Description of Drawings

FIG. 1 is a schematic plan view of a furnace apparatus according to an embodiment of the present disclosure.
FIG. 2 is an enlarged plan view of part A, a sealing portion, according to an embodiment of the present disclosure.
FIG. 3 is a diagram illustrating a state of use of a sealing portion according to an embodiment of the present disclosure when a rotating body according to an embodiment of the present disclosure moves in the longitudinal direction.
FIG. 4 is a diagram illustrating a state of use of a sealing portion according to an embodiment of the present disclosure when a rotating body according to an embodiment of the present disclosure moves in the radial direction.
FIG. 5 is an enlarged plan view of a raw material supply portion according to an embodiment of the present disclosure.
FIG. 6 is an enlarged plan view of a raw material discharge portion according to an embodiment of the present disclosure.

### Description of Reference Characters

10: Furnace Apparatus 100: Rotating Portion
110: Rotating Body 120: Heating Region
130: Cooling Region 131: Cooling Water Spray Device
200: Fixing Portion 210: First Fixing Chamber
220: Second Fixing Chamber 300: Sealing Portion
310: Sealing Ring 311: Accommodation Space
320: Packing Member 330: Elastic Member
340: Connecting Member 341: Flexible Material
400: Raw Material Supply Portion 410: First Supply Hopper
411: First Load Cell 412: First Rotary Valve
420: Second Supply Hopper 421: Second Load Cell
422: Second Rotary Valve 430: First Screw Feeder
431, 531: Supply Motor 432, 532, Screw
433, 533: Housing 500: Raw Material Discharge Portion
510: First Discharge Hopper 511: Third Load Cell
520: Second Discharge Hopper 521: Fourth Load Cell
522: Fourth Rotary Valve 530: Second Screw Feeder
540: Pneumatic Conveying Device

### Best Mode for the Invention

Hereinafter, specific embodiments of the present disclosure will be described with reference to the attached drawings. However, the spirit of the present disclosure is not limited to the presented embodiments. Those skilled in the art, understanding the spirit of the present disclosure, will readily propose other backward inventions or other embodiments within the scope of the present disclosure by adding, modifying, or deleting other components within the same spirit, or the like. However, such inventions are also considered to be within the scope of the present disclosure.

Furthermore, throughout the specification, the term "connected" to another component means not only that these components are "directly connected," but also that they are "indirectly connected" with another component therebetween. Furthermore, unless otherwise specified, the term "including" a component does not exclude other components, but rather implies the inclusion of other components.

Furthermore, components with the same function within the same spirit illustrated in the drawings of respective embodiments are described using the same reference numerals.

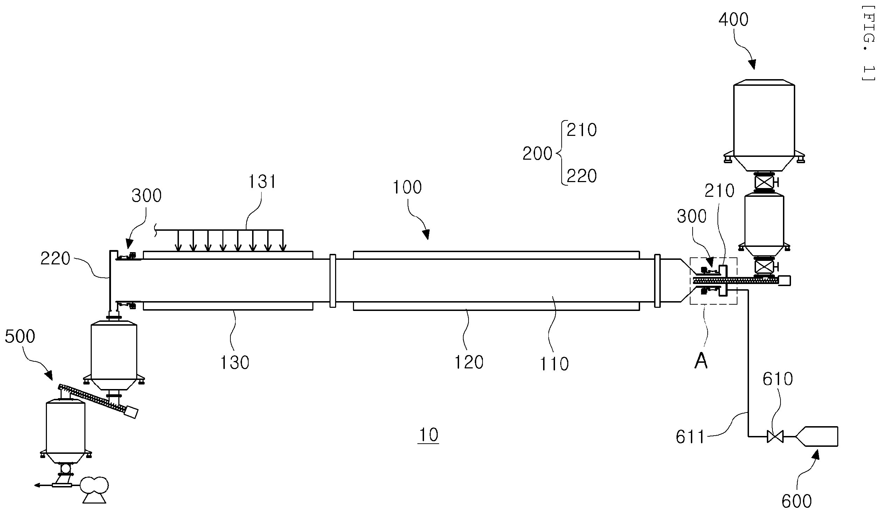

FIG. 1 is a schematic plan view illustrating a furnace apparatus (10) according to an embodiment of the present disclosure. As illustrated in FIG. 1, the furnace apparatus (10) according to an embodiment of the present disclosure includes a rotating portion (100), a fixing portion (200), a sealing portion (300), a raw material supply portion (400), and a raw material discharge portion (500), and may be a rotary kiln-type furnace that performs a firing process on raw materials such as black powder.

The rotating portion (100) according to an embodiment of the present disclosure may include a rotating body (110) that rotates to agitate the raw material supplied to the interior thereof. The rotating body (110) may be a cylindrical shell. In the rotating body (110), a heating region (120) for heating the raw material and a cooling region (130) for cooling the raw material heated while passing through the heating region (120) are provided sequentially. At this time, the heating region (120) may be disposed on the raw material supply portion (400) side, and the cooling region (130) may be disposed on the raw material discharge portion (500) side. The heating region and cooling region were configured in two stages in the related art, but the furnace apparatus (10) according to an embodiment of the present disclosure has the heating region (120) and the cooling region (130) integrated within a single rotating body (110), thereby enabling scale-up of the furnace equipment.

In addition, the rotating portion (100) according to an embodiment of the present disclosure may be provided such that the rotating body (110) is inclined with respect to a surface parallel to the ground, and the raw material supplied inside the rotating body (110) is heated at a temperature of 500°C or higher in the heating region (120) to perform a firing process, and may be cooled while passing through the cooling region (130) along the inclined rotating body (110). A heater (not illustrated) surrounding the outside of the rotating body (110) may be provided in the heating region (120), and a separate cooling device (not illustrated) may be installed inside the rotating body (110) in the cooling region (130). Furthermore, the furnace apparatus (10) according to an embodiment of the present disclosure may further include a cooling water spray device (131) provided on the cooling region (130) side and spraying cooling water onto the outer peripheral surface of the rotating body (110). Accordingly, the furnace apparatus (10) according to an embodiment of the present disclosure may increase the cooling effect by applying an indirect cooling device to the outside of the rotating body (110).

The fixing portion (200) according to an embodiment of the present disclosure includes a first fixing chamber (210) and a second fixing chamber (220) which are respectively connected to both ends of the rotating portion (100). The first fixing chamber (210) may be provided on the raw material supply portion (400) side, and the second fixing chamber (220) may be provided on the raw material discharge portion (500) side. At this time, unlike the rotating portion (100), the fixing portion (200) according to an embodiment of the present disclosure does not rotate and may be fixed to the ground to support the rotating portion (100). At this time, the first fixing chamber (210) may be provided to communicate with the raw material supply portion (400), and the second fixing chamber (220) may be provided to communicate with the raw material discharge portion (500). In addition, an exhaust duct (not illustrated) may be installed on one side of the second fixing chamber (220), and exhaust gas generated during firing within the rotating body (110) may be discharged through the exhaust duct (not illustrated).

At this time, the furnace apparatus (10) according to an embodiment of the present disclosure may form positive pressure within the rotating body (110) to perform the firing process. For example, the firing process may be performed by forming the pressure within the rotating body (110) within a preset numerical range, and the preset numerical range may be 2 mbar to 15 mbar. Accordingly, the furnace apparatus (10) according to an embodiment of the present disclosure may prevent oxygen from flowing in through the exhaust duct (not illustrated). Meanwhile, the furnace apparatus (10) according to an embodiment of the present disclosure may further include a pressure gauge (not illustrated) measuring the pressure inside the rotating body (110) to maintain positive pressure inside the rotating body (110), and when the pressure measured by the pressure gauge (not illustrated) deviates from a preset numerical range, a fan (not illustrated) installed on the exhaust duct (not illustrated) side may be controlled to adjust the pressure within the preset numerical range.

In addition, the furnace apparatus (10) according to an embodiment of the present disclosure may further include a thermometer (not illustrated) for measuring the temperature inside the rotating body (110) and an oxygen concentration meter (not illustrated) for measuring the concentration of oxygen flowing inside the rotating body (110). If the oxygen concentration measured by the oxygen concentration meter (not illustrated) deviates from a preset numerical range, an alarm may be sent to the operator and the firing process may be stopped. At this time, the pressure meter (not illustrated), the thermometer (not illustrated), and the oxygen concentration meter (not illustrated) are not limited in terms of installation positions and structures as long as the pressure, temperature, and oxygen concentration inside the rotating body (110) may be measured thereby.

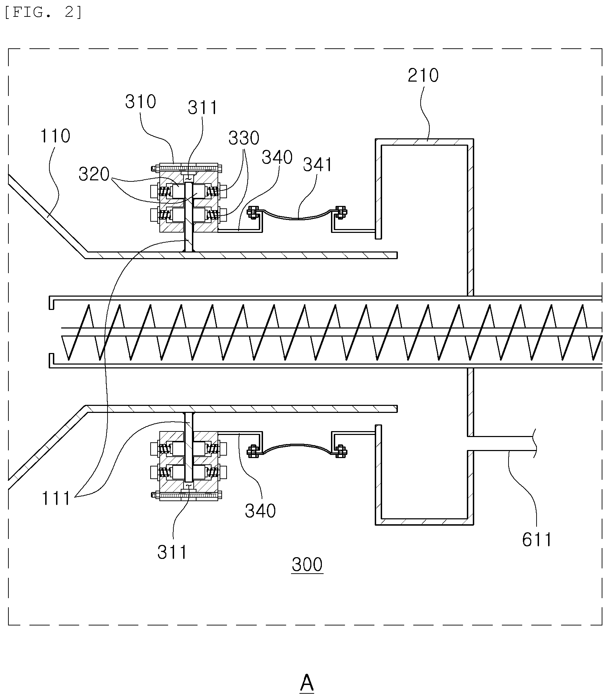

The sealing portion (300) according to an embodiment of the present disclosure is provided on the side on which the rotating portion (100) and the fixing portion (200) are coupled, and may be provided to prevent air from entering the rotating portion (100). In the related art, fires and explosions occurs due to oxygen entering the rotating body (110) during the firing process. However, the furnace apparatus (10) according to an embodiment of the present disclosure utilizes the sealing portion (300) to control the interior of the rotating portion (100) as an oxygen-free atmosphere, thereby preventing problems of fires and explosions. The specific configuration and operating conditions of the sealing portion (300) will be described below with reference to FIGS. 2 to 4.

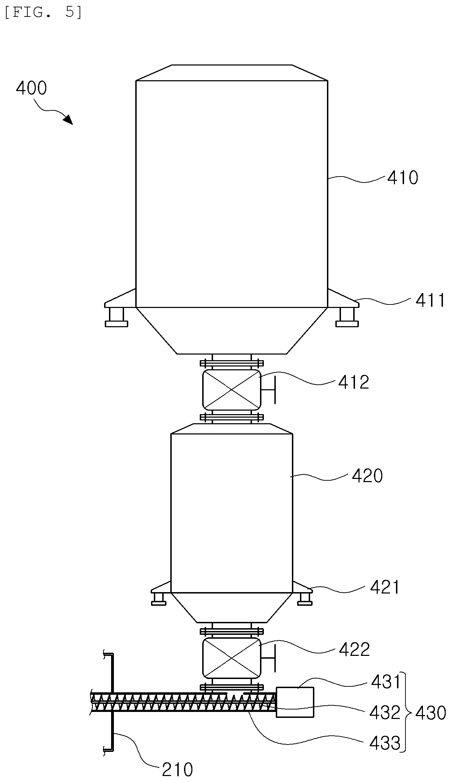

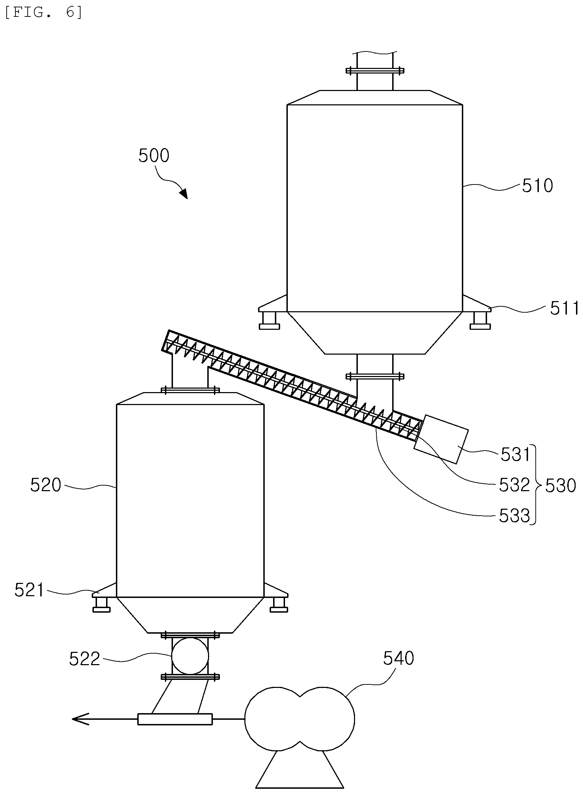

The raw material supply portion (400) according to an embodiment of the present disclosure is connected to the first fixing chamber (210) and supplies the raw material to the rotating portion (100). Furthermore, the raw material discharge portion (500) according to an embodiment of the present disclosure is connected to the second fixing chamber (220) and discharges the fired raw material from the rotating portion (100). The specific configuration and function of the raw material supply portion (400) and the raw material discharge portion (500) will be described later with reference to FIGS. 5 and 6.

Furthermore, the furnace apparatus (10) according to an embodiment of the present disclosure may further include a nitrogen supply device (600) for supplying nitrogen gas, a control valve (610) for controlling the amount of nitrogen gas supplied from the nitrogen supply device (600), and a nitrogen supply pipe (611) connecting the nitrogen supply device (600) and the rotating body (110). At this time, the control valve (610) may be a Flow Control Valve (FCV) capable of PID control, and may be controlled to supply nitrogen gas when the pressure measured by the pressure gauge (not illustrated) falls below the lower limit of a preset numerical range. Thus, the furnace apparatus (10) according to an embodiment of the present disclosure may maintain positive pressure within the rotating body (110) during the firing process.

That is, the furnace apparatus (10) according to an embodiment of the present disclosure may scale up to 10 tons/h with a single firing facility by sequentially designing a heating region (120) and a cooling region (130) within a single rotating body (110). Furthermore, by applying a sealing portion (300), the interior of the rotating body (110), where the firing process is performed, is controlled as an oxygen-free atmosphere, thereby preventing fire and explosion problems. Furthermore, the furnace apparatus (10) according to an embodiment of the present disclosure may form positive pressure within the rotating body (110) by the nitrogen supply device (600). In particular, by supplying nitrogen gas when the sealing portion (300) fails, or during initial operation or when operation is terminated, the interior of the rotating body (110) may be formed to have positive pressure, thereby indirectly blocking the inflow of oxygen gas.

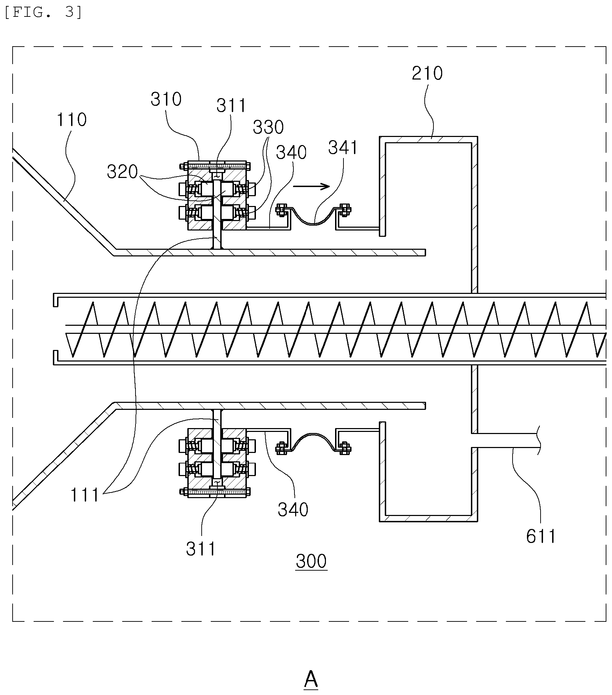

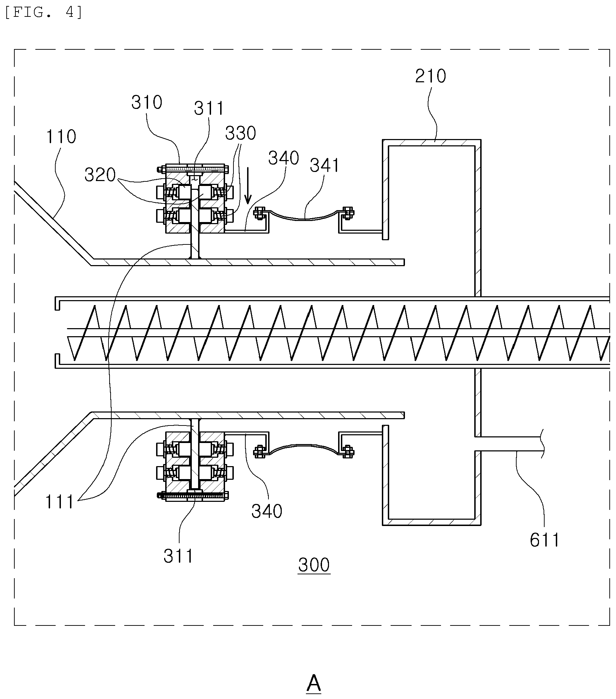

FIGS. 2 to 4 illustrate the specific configuration and usage state of a sealing portion (300) according to an embodiment of the present disclosure. More specifically, FIG. 2 is an enlarged plan view of a sealing portion (300) according to an embodiment of the present disclosure, FIG. 3 is a usage state diagram of a sealing portion (300) according to an embodiment of the present disclosure when moving in the longitudinal direction, and FIG. 4 is a usage state diagram of a sealing portion (300) according to an embodiment of the present disclosure when moving in the radial direction. Hereinafter, the sealing portion (300) according to an embodiment of the present disclosure will be described with reference to FIGS. 2 to 4.

In addition, in the furnace apparatus (10) according to an embodiment of the present disclosure, the sealing portion (300) may be provided on each of the first fixing chamber (210) and the second fixing chamber (220, see FIG. 1), and the same configuration may be applied. Therefore, although FIGS. 2 to 4 are described based on the first fixing chamber (210), the sealing portion (300) applied to the second fixing chamber (220, see FIG. 1) may also be described in the same manner.

A sealing portion (300) according to an embodiment of the present disclosure includes a sealing ring (310) having a ring shape surrounding the rotating body (110) and having an accommodation space (311) to accommodate a disk (111) protruding outwardly of the rotating body (110) therein, a packing member (320) provided inside the sealing ring (310) and compressing both side surfaces of the disk (111), an elastic member (330) connected to one end of the packing member (320) and compressing the packing member (320) toward the disk (111), and a connecting member (340) connecting the sealing ring (310) and the fixing portion (200, see FIG. 1) and preventing air from entering the interior of the rotating body (110). Here, FIGS. 2 through 4 illustrate that the connecting member (340) connects the sealing ring (310) and the first fixing chamber (210), and similarly, the connecting member (340) may also connect the sealing ring (310) and the second fixing chamber (220) to form a sealed structure.

Meanwhile, air flowing outside the rotating body (110) may flow along the outer peripheral surface of the disk (111) and flow into the gap between the first fixing chamber (210) and the rotating body (110), which may potentially cause fire and explosion during the firing process. In this case, the packing member (320) may block the air inflow path by vertically compressing the disk (111). A plurality of packing members (320) may be respectively provided on both sides of the disk (111). In addition, the plurality of packing members (320) may be supported by receiving elastic force from the elastic member (330).

Furthermore, the connecting member (340) according to an embodiment of the present disclosure may be at least partially formed of a flexible material (341) that expands or contracts along with the longitudinal movement of the rotating body (110). Accordingly, as illustrated in FIG. 3, the rotating body (110) may move toward the first fixing chamber (210) along the direction of the arrow during the firing process. At this time, as the flexible material (341) contracts, the sealing portion (300) may be prevented from being distorted or damaged, thereby forming a continuous sealed structure.

In addition, the accommodation space (311) may be provided to be larger than the disk (111) to accommodate the radial movement of the rotating body (110). That is, as illustrated in FIG. 4, the rotating body (110) may move in the radial direction during the firing process. At this time, since the accommodation space (311) is provided to be larger than the disk (111), the movement of the disk (111) may be accommodated within the accommodation space (311), and the sealing portion (300) may be prevented from being twisted or damaged, thereby forming a continuous sealed structure. Here, the longitudinal direction may refer to the longitudinal direction of the rotating body (110), and the radial direction may refer to the radial direction of the rotating body (110), which is perpendicular to the longitudinal direction.

Therefore, the furnace apparatus (10) according to an embodiment of the present disclosure may block oxygen gas flowing into the gap between the rotating portion (100) and the fixing portion (200) from the outside by the sealing portion (300), thereby preventing fire and explosion that may occur during the firing process. In addition, during the firing process, movement of the rotating portion (100) in the longitudinal direction or the radial direction perpendicular thereto may occur, and thus, problems of damage and distortion of the sealing portion (300) may occur. However, the sealing portion (300) according to an embodiment of the present disclosure may accommodate the longitudinal and radial movements of the rotating body (110) while continuously forming a sealed structure.

FIG. 5 is an enlarged view of the raw material supply portion (400) according to an embodiment of the present disclosure. Referring to FIG. 5, a raw material supply portion (400) according to an embodiment of the present disclosure includes a first supply hopper (410) for storing raw material, a second supply hopper (420) connected to the first supply hopper (410) and receiving and storing the raw material from the first supply hopper (410), and a first screw feeder (430) connected to the second supply hopper (420) and receiving the raw material from the second supply hopper (420) and transporting the same to the rotating body (110). Since the first screw feeder (430) is provided to penetrate the first fixing chamber (210), the raw material supplied through the first supply hopper (410) and the second supply hopper (420) may be transferred to the interior of the rotating body (110).

Meanwhile, the first supply hopper (410) and the second supply hopper (420) may be connected by a first rotary valve (412), and the second supply hopper (420) and the first screw feeder (430) may be connected by a second rotary valve (422). The first rotary valve (412) may transfer a preset amount of raw material from the first supply hopper (410) to the second supply hopper (420). Similarly, the second rotary valve (422) may transfer a preset amount of raw material from the second supply hopper (420) to the first screw feeder (430). At this time, the preset amounts of the first rotary valve (412) and the second rotary valve (422) may be the same, thereby enabling continuous discharge of the raw material.

In addition, the first supply hopper (410) and the second supply hopper (420) may include load cells (411, 421) measuring the load of the raw material stored therein, respectively. More specifically, the first supply hopper (410) may include a first load cell (411), and the second supply hopper (420) may include a second load cell (421). At this time, the first supply hopper (410) and the second supply hopper (420) may be provided so that the amounts of the raw material stored therein, measured by the load cells (411, 421), are a preset numerical range or more. That is, external air may be introduced together in the process of the raw material supply through the first supply hopper (410) and the second supply hopper (420) and may be introduced into the interior of the rotating portion (100), and to prevent this, raw material of a preset numerical range or more may be continuously supplied to the first supply hopper (410) and the second supply hopper (420), thereby forming a sealed structure using the raw material.

Furthermore, the first screw feeder (430) includes a supply motor (431), a screw (432), a housing (433), and a rotation control unit (not illustrated). The housing (433) has a cylindrical shape, the screw (432) transports the raw material inside the housing (433), the supply motor (431) is provided at one end of the housing (433) and may rotate the screw (432), and the rotation control unit (not illustrated) is connected to the supply motor (431) and may control the rotation speed of the screw (432). At this time, the rotation control unit (not illustrated) may control the rotation speed of the screw (432) so that the amount of the raw material delivered by the first rotary valve (412) and the second rotary valve (422) and the amount of the raw material transported into the interior of the rotating body (110) by the screw (432) are the same. As a result, the raw material transported inside the housing (433) is fully filled and transported, thereby forming a sealed structure inside the housing (433). However, it is not limited thereto, and to prevent a defect in the first screw feeder (430), the rotation control unit (not illustrated) may control the rotation speed of the screw (432) so that the amount of the raw material transferred into the interior of the rotating body (110) by the screw (432) is greater than the amount of the raw material transferred by the first rotary valve (412) and the second rotary valve (422).

FIG. 6 is an enlarged view of a raw material discharge portion (500) according to an embodiment of the present disclosure. Referring to FIG. 6, a raw material discharge portion (500) according to an embodiment of the present disclosure includes a first discharge hopper (510) for storing the discharged raw material, a second discharge hopper (520) connected to the first discharge hopper (510) and receiving and storing the raw material from the first discharge hopper (510), and a second screw feeder (530) connecting the first discharge hopper (510) and the second discharge hopper (520) and installed to be inclined with respect to a plane parallel to the ground, and as the first discharge hopper (510) is connected to the second fixing chamber (220), the raw material discharged through the first discharge hopper (510) and the second discharge hopper (520) may be discharged to the outside. At this time, the second screw feeder (530) may be inclined so that the side connected to the first discharge hopper (510) is closer to the ground than the side connected to the second discharge hopper (520). Accordingly, the raw material transported through the second screw feeder (530) may be transported in a direction opposite to the direction of gravity, thereby forming a sealed structure within the second screw feeder (530).

The first discharge hopper (510) and the second fixing chamber (220) may be connected via a discharge pipe, and although not illustrated in the drawing, a third rotary valve (not illustrated) may be installed to control discharge by a preset amount. Furthermore, the second discharge hopper (520) may discharge a preset amount of the raw material to the outside by the fourth rotary valve (522), and at this time, the preset amounts of the third rotary valve (not illustrated) and the fourth rotary valve (522) may be the same so that continuous discharge is possible.

In addition, the first discharge hopper (510) and the second discharge hopper (520) may include load cells (511, 521) measuring the loads of the raw material respectively stored therein, similar to the first supply hopper (410, see FIG. 5) and the second supply hopper (420, see FIG. 5). More specifically, the first discharge hopper (510) may include a third load cell (511), and the second discharge hopper (520) may include a fourth load cell (521). At this time, the first discharge hopper (510) and the second discharge hopper (520) may be provided so that the amounts of raw material stored therein, measured by the load cells (511, 521), are a preset numerical range or more. That is, external air may be introduced together in the process of the raw material discharge through the first discharge hopper (510) and the second discharge hopper (520) and may be introduced into the interior of the rotating portion (100), and to prevent this, raw material of a preset numerical range or more may be continuously provided to the first discharge hopper (510) and the second discharge hopper (520), thereby forming a sealed structure by the raw material.

Furthermore, the second screw feeder (530) may have the same configuration as the first screw feeder (430, see FIG. 5), and may include a supply motor (531), a screw (532), a housing (533), and a rotation control unit (not illustrated). The supply motor (531), the screw (532), the housing (533), and the rotation control unit (not illustrated) may have the same function as the configuration of the first screw feeder (430, see FIG. 5). At this time, the rotation control unit may control the rotation speed of the screw (532) so that the amount of the raw material transferred from the rotating body (110) to the first discharge hopper (510) and the amount of the raw material transported to the second discharge hopper (520) by the screw (532) are the same. Accordingly, the raw material being transported within the housing (533) is fully filled and transported, thereby forming a sealed structure within the housing (533). However, it is not limited thereto as in the first screw feeder (430, see FIG. 5).

In addition, the raw material discharge portion (500) according to an embodiment of the present disclosure may further include a pneumatic conveying device (540) connected to the second discharge hopper (520) and used to transport the raw material received from the second discharge hopper (520) using gas. The pneumatic conveying device (540) may facilitate the discharge of the raw material, indirectly cool the raw material, and resolve the problem of raw material accumulation.

While the present disclosure has been described above with reference to embodiments, the present disclosure is not limited to the above-described embodiments, and it is obvious that modifications can be made and implemented by a person skilled in the art without changing the technical idea of the present disclosure as claimed in the claims.

## Claims

1. A furnace apparatus comprising:
a rotating portion including a rotating body rotating to stir a raw material supplied thereto, the rotating body including a heating region for heating the raw material and a cooling region for cooling the raw material heated while passing through the heating region, sequentially provided therein;
a fixing portion including a first fixing chamber and a second fixing chamber connected to both ends of the rotating portion respectively, and supporting the rotating portion;
a sealing portion provided on a side on which the rotating portion and the fixing portion are coupled, and provided to prevent air from entering the rotating portion;
a raw material supply portion connected to the first fixing chamber and supplying the raw material to the rotating portion; and
a raw material discharge portion connected to the second fixing chamber and discharging a fired raw material from the rotating portion.

2. The furnace apparatus of claim 1, wherein the sealing portion includes,
a sealing ring having a ring shape surrounding the rotating body and having an accommodation space therein to accommodate a disk protruding outwardly of the rotating body;
a packing member provided inside the sealing ring and compressing both side surfaces of the disk;
an elastic member connected to one end of the packing member and compressing the packing member toward the disk; and
a connecting member connecting the sealing ring and the fixing portion and preventing air from entering an interior of the rotating body.

3. The furnace apparatus of claim 2, wherein at least a portion of the connecting member is composed of a flexible material that expands or contracts with longitudinal movement of the rotating body.

4. The furnace apparatus of claim 3, wherein the accommodation space is provided to be larger than the disk to accommodate radial movement of the rotating body.

5. The furnace apparatus of claim 4, wherein the raw material supply portion includes,
a first supply hopper storing a raw material;
a second supply hopper connected to the first supply hopper, and receiving and storing a preset amount of the raw material from the first supply hopper via a first rotary valve; and
a first screw feeder connected to the second supply hopper and receiving a preset amount of the raw material from the second supply hopper via a second rotary valve and transferring the raw material to the rotating body,
wherein the first rotary valve and the second rotary valve have the same preset amount.

6. The furnace apparatus of claim 5, wherein the first supply hopper and the second supply hopper include,
a load cell for measuring a load of the raw material respectively stored therein, and
the first supply hopper and the second supply hopper are provided such that an amount of raw material stored therein, measured by the load cell, is equal to a preset numerical range or more.

7. The furnace apparatus of claim 6, wherein the first screw feeder includes,
a cylindrical housing;
a screw provided inside the housing and transporting the raw material;
a supply motor provided on one end of the housing and rotating the screw; and
a rotation control unit connected to the supply motor and controlling a rotational speed of the screw,
wherein the rotation control unit controls a rotational speed of the screw such that an amount of raw material delivered by the first rotary valve and the second rotary valve is equal to an amount of raw material transported into the rotating body by the screw.

8. The furnace apparatus of claim 5, wherein the raw material discharge portion includes,
a first discharge hopper storing the discharged raw material;
a second discharge hopper connected to the first discharge hopper, and receiving and storing the raw material from the first discharge hopper; and
a second screw feeder connecting the first discharge hopper and the second discharge hopper and installed to be inclined with respect to a plane parallel to a ground.

9. The furnace apparatus of claim 8, wherein the second screw feeder is provided such that a side thereof connected to the first discharge hopper is inclined to be closer to the ground than a side connected to the second discharge hopper.

10. The furnace apparatus of claim 9, wherein the raw material discharge portion further includes,
a pneumatic conveying device connected to the second discharge hopper and conveying the raw material received from the second discharge hopper using gas.

11. The furnace apparatus of claim 10, further comprising:
a pressure gauge measuring pressure inside the rotating body;
a thermometer measuring a temperature inside the rotating body; and
an oxygen concentration meter measuring a concentration of oxygen flowing inside the rotating body.

12. The furnace apparatus of claim 11, further comprising:
a nitrogen supply device for supplying nitrogen gas;
a control valve for controlling an amount of the nitrogen gas supplied from the nitrogen supply device; and
a nitrogen supply pipe connecting the nitrogen supply device and the rotating body.

13. The furnace apparatus of claim 12, wherein the control valve is controlled to supply nitrogen gas when the pressure measured by the pressure gauge is lower than a lower limit of a preset numerical range.

14. The furnace apparatus of claim 13, further comprising:
a cooling water spray device provided on the cooling region side and spraying cooling water onto an outer peripheral surface of the rotating body.
